# EUROPÄISCHE PATENTSCHRIFT

(11) **EP 1 703 194 B1**
(45) Veröffentlichungstag und Bekanntmachung des Hinweises auf die Patenterteilung: **21.11.2012**
(21) Anmeldenummer: 06003582.1
(22) Anmeldetag: 22.02.2006
(51) Int. Cl.: F16L 41/06

(54) **Anbohrarmatur für Fluidrohre**
Tapping apparatus for fluid pipes
Appareil de perçage pour tuyau fluide

(30) Priorität: 16.03.2005 DE 102005012529
(43) Veröffentlichungstag der Anmeldung: 20.09.2006
(73) Patentinhaber: Hawle Armaturen GmbH, 83395 Freilassing (DE)
(72) Erfinder: Hasenkämper, Horst, 42549 Velbert (DE); Hoffmann, Helmut, 42549 Velbert (DE)
(74) Vertreter: Schwabe - Sandmair - Marx

(56) Entgegenhaltungen:
- DE-A1- 10 021 592
- DE-U- 7 516 788
- DE-U1- 9 115 052

## Beschreibung

Die Erfindung bezieht sich auf eine Anbohrarmatur für Fluidrohre, insbesondere aus metallischen, wie Stahl- und Gusswerkstoffen, mit einem Bohr-, Fräs- oder Stanzelement, mittels dem eine Wandung des Fluidrohrs durchbohr-, durchfräs- bzw. durchstanzbar ist, einem Schellengehäuse, das am Fluidrohr positionier- und fixierbar ist und in dem das Bohr-, Fräs- oder Stanzelement in Axialrichtung verstellbar aufgenommen ist, und einer Antriebseinrichtung, mittels der das Bohr-, Fräs- oder Stanzelement im Schellengehäuse in dessen und seiner Axial- bzw. in Radialrichtung des Fluidrohres verstellbar ist.

Derartige Anbohrarmaturen werden weit verbreitet im Stand der Technik eingesetzt, siehe z.B. DE 9115052U und DE 7516788U. Schwierigkeiten beim Einsatz derartiger Anbohrarmaturen treten immer dann auf, wenn die anzubohrenden Leitungen bzw. Fluidrohre aus vergleichsweise harten und widerstandsfähigen Werkstoffen ausgebildet sind.

Der Erfindung liegt die Aufgabe zugrunde, die vorstehend geschilderte Anbohrarmatur für Fluidrohre derart weiterzubilden, dass mit einem vergleichsweise geringen technisch-konstruktiven Aufwand aus beliebig harten Werkstoffen ausgebildete Fluidrohre ohne weiteres angebohrt werden können.

Diese Aufgabe wird erfindungsgemäß dadurch gelöst, dass die Antriebseinrichtung der erfindungsgemäßen Anbohrarmatur einen ersten Gewindeantrieb mit einem ersten Innen- und einem ersten Außengewindeglied und einen zweiten Gewindeantrieb mit einem zweiten Innen- und einem zweiten Außengewindeglied aufweist, dass die beiden Gewindeantriebe gleichzeitig betätigbar sind, und dass die beiden Gewindeantriebe in Bezug auf die axiale Verstellung des Bohr-, Fräs- oder Stanzelements gegenläufig ausgebildet sind, so dass der Vorschub bzw. der Rückhub des Bohr-, Fräs- oder Stanzelements bei gleichzeitiger Betätigung der beiden Gewindeantriebe der Differenz zwischen der Gewindesteigung des ersten Gewindeantriebs und der Gewindesteigung des zweiten Gewindeantriebs entspricht. Mittels der mit der vorstehend geschilderten Antriebsvorrichtung ausgebildeten erfindungsgemäßen Anbohrarmatur ist es möglich, mit einem vergleichsweise geringen technisch-konstruktiven Aufwand sehr kleine Vorschubgeschwindigkeiten des Bohr-, Fräs- bzw. Stanzelements zu erzielen, welches die Durchdringung der Wandung des Fluidrohres bewerkstelligt. In Abhängigkeit von der Werkstoffbeschaffenheit des Fluidrohres kann die Vorschubgeschwindigkeit äußerst gering gewählt werden. Hierzu muss kein nur mit einem erheblichen technisch-konstruktiven Aufwand herstellbares und vergleichsweise schwierig zu betätigendes Gewinde mit einer äußerst geringen Gewindesteigung erstellt werden. Vielmehr ergibt sich die geringe Vorschubgeschwindigkeit des Bohr-, Fräs- bzw. Stanzwerkzeugs daraus, dass zwei gegenläufige Gewindeantriebe zum Antrieb desselben eingesetzt werden, wobei sich die Vorschubgeschwindigkeit des Bohr-, Fräs- bzw. Stanzelements eben entsprechend der Differenz der Gewindesteigungen der beiden Gewindeantriebe ergibt und somit quasi beliebig gering einstellbar ist. Hierzu können Gewinde mit üblichen Gewindesteigungen eingesetzt werden.

Die Differenz der Gewindesteigung zwischen den beiden Gewindeantrieben kann vorteilhaft zumindest 0,1 mm je Umdrehung, vorzugsweise ca. 0,25 mm je Umdrehung, betragen, so dass das Bohr-, Fräs- oder Stanzelement bei gleichzeitiger Betätigung der beiden Gewindeantriebe je Umdrehung um zumindest 0,1 mm, vorzugsweise ca. 0,25 mm, in seiner Axialrichtung verstellbar ist. Grundsätzlich sind jedoch auch noch geringere Vorschubgeschwindigkeiten je Umdrehung möglich.

Zur Durchdringung von beispielsweise aus Gusswerkstoffen hergestellten Fluidrohren hat sich eine Anbohrarmatur als besonders geeignet herausgestellt, bei der der erste Gewindeantrieb eine Gewindesteigung von 1,75 mm je Umdrehung und der zweite Gewindeantrieb eine in Bezug auf die der ersten gegenläufige Gewindesteigung von 1,5 mm je Umdrehung aufweist.

Gemäß einer vorteilhaften Weiterbildung der erfindungsgemäßen Anbohrarmatur ist das erste Innengewindeglied des ersten Gewindeantriebs axial- und drehfest mit dem Bohr-, Fräs- bzw. Stanzelement verbunden.

In konstruktiv wenig aufwendiger Weise lässt sich das erste Außengewindeglied des ersten Gewindeantriebs am fluidrohrseitigen Endabschnitt einer Gewindehülse und das zweite Außengewindeglied des zweiten Gewindeantriebs am fluidrohrfernen Endabschnitt derselben Gewindehülse ausgestalten.

Um das Bohr-, Fräs- bzw. Stanzelement vor der Durchdringung der Wandung des Fluidrohres mit einem möglichst geringen Verstellaufwand möglichst nah an die Außenseite der Wandung heranzuführen, ist es vorteilhaft, wenn das erste Innengewindeglied des ersten Gewindeantriebs separat betätigbar ist. Hierdurch kann das erste Innengewindeglied mit der vollen Verstellgeschwindigkeit des ersten Gewindeantriebs in Richtung auf das Fluidrohr bewegt werden, bis das Bohr-, Fräs- bzw. Stanzelement in Anlage an die Außenseite der Wandung des Fluidrohrs gerät.

Die separate Betätigung des ersten Innengewindeglieds der erfindungsgemäßen Anbohrarmatur ist mit einem vergleichsweise geringen Aufwand realisierbar, wenn das erste Innengewindeglied des ersten Gewindeantriebs mittels eines das zweite Innengewindeglied des zweiten Gewindeantriebs axial durchgreifenden Betätigungswerkzeugs, vorzugsweise eines Mehrkants, betätigbar ist.

Zur gleichzeitigen Betätigung der beiden Gewindeantriebe hat sich ein Zweistufenmehrkant als besonders geeignet erwiesen, wobei die Mehrkantstufe zur Betätigung des ersten Gewindeantriebs einen kleineren Durchmesser als die Mehrkantstufe zur Betätigung des zweiten Gewindeantriebs aufweist. Auch der Durchmesser der Mehrkantstufe zur Betätigung des zweiten Gewindeantriebs ist kleiner als der Innendurchmesser des hohlzylindrisch ausgebildeten zweiten Innengewindeglieds des zweiten Gewindeantriebs, so dass der Zweistufenmehrkant auch mit seiner der Betätigung des zweiten Gewindeantriebs dienenden Mehrkantstufe in den Innenraum des zweiten Innengewindeglieds vorstehen kann.

Vorteilhaft ist die vorstehend geschilderte erfindungsgemäße Anbohrarmatur als Wasser- oder Gas-Hausanschlussarmatur einsetzbar.

Sie kann zur Durchbohrung, -fräsung bzw. -stanzung von Fluidrohren aus Sphäro-Guss, ggf. mit ZM-Auskleidung und/oder ZM-Ummantelung, oder aus Stahl od.dgl. ausgebildet sein.

Das Fräselement kann gemäß einer besonders vorteilhaften Ausgestaltung der erfindungsgemäßen Anbohrarmatur als Sägekranzfräser ausgebildet sein, wobei als Werkstoff für den Sägekranzfräser vorteilhaft HSS-Bi-Metall gewählt werden kann.

Um zu vermeiden, dass das mittels der Anbohrarmatur aus der Wandung des Fluidrohrs herausgetrennte Wandungsstück bzw. die sog. Platine aus dem Schellengehäuse der Anbohrarmatur sich entfernt und in den Fludkreislauf gerät, weist die erfindungsgemäße Anbohrarmatur vorteilhaft einen Magneten auf, mittel dem das aus dem Fluidrohr ausgebohrte, -gefräste bzw. -gestanzte Wandungsstück bzw. die Platine festhaltbar ist.

Alternativ ist es möglich, das Bohr-, Fräs- bzw. Stanzelement der erfindungsgemäßen Anbohrarmatur auf seiner Innenmantelfläche mit einem flachen Innengewinde bzw. mit einer Punktierung zu versehen, mittels der auf der Außenmantelfläche des aus der Wandung herauszutrennenden Wandungsstücks ein Gewinde einschneidbar und so das Wandungsstück fixierbar ist.

Gemäß einer weiteren Ausführungsform der erfindungsgemäßen Anbohrarmatur kann die aus der Wandung des Fluidrohrs herausgetrennte Platine bzw. das aus der Wandung des Fluidrohrs herausgetrennte Wandungsstück im Schellengehäuse bzw. innerhalb des Bohr-, Fräs- bzw. Stanzelements gehalten werden, wenn das Bohr-, Fräs- bzw. Stanzelement auf seiner Innenmantelfläche ein radial einwärts vorstehendes dünnwandiges Vorsprungelement, z.B. einen dünnwandigen Teilkreis, aufweist, das bzw. der vorzugsweise aus Blech, Edelstahl oder einem ähnlichen Werkstoff ausgebildet ist.

Im folgenden wird die Erfindung anhand einer Ausführungsform unter Bezugnahme auf die Zeichnung näher erläutert.

Es zeigen:
- Figur 1: eine teilweise geschnittene Prinzipdarstellung einer Ausführungsform einer erfindungsgemäßen Anbohrarmatur; und
- Figur 2: einen Mehrkant und einen Zweistufenmehrkant zur Betätigung einer Antriebseinrichtung der in Figur 1 gezeigten Ausführungsform der erfindungsgemäßen Anbohrarmatur.

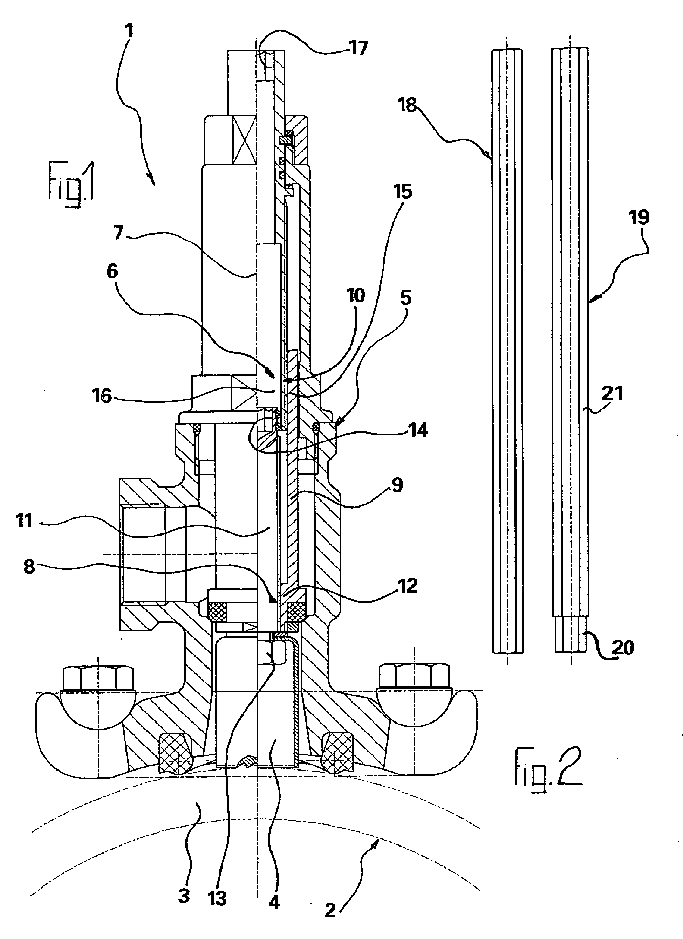

Eine in Figur 1 in teilweise geschnittener Darstellung gezeigte Ausführungsform einer erfindungsgemäßen Anbohrarmatur 1 dient dazu, ein in Figur 1 unterhalb der Anbohrarmatur 1 mittels einer gestrichelten Linie bereichsweise gezeigte Fluidrohr 2 anzubohren. Die Anbohrarmatur 1 ist beispielsweise als Wasser-Hausanschlussarmatur einsetzbar. Mittels der gezeigten Anbohrarmatur 1 ist es möglich, ein Fluidrohr 2 aus Sphäro-Guss, ggf. mit ZM-Auskleidung und/oder ZM-Ummantelung, anzubohren. Die Durchdringung der Wandung 3 des Fluidrohrs 2 erfolgt mittels eines Bohr-, Fräs- oder Stanzelements. Im in Figur 1 gezeigten Ausführungsbeispiel der erfindungsgemäßen Anbohrarmatur ist ein Fräselement in Form eines Sägekranzfräsers 4 ausgebildet. Die Durchdringung der Wandung 3 erfolgt dadurch, dass der Sägekranzfräser 4 unter Rotation desselben einen Vorschub in Richtung auf den Innenraum des Fluidrohrs 2 erfährt.

Der Sägekranzfräser 4 ist innerhalb eines Schellengehäuses 5 drehbar und in seiner Axialrichtung verstellbar gehaltert, und zwar innerhalb desjenigen Abschnitts des Schellengehäuses 5, der dem Fluidrohr 2 bzw. dessen Wandung 3 zugewandt und zur Wandung hin offen ist.

Innerhalb des in Figur 1 oberhalb des Sägekranzfräsers 4 angeordneten Bereichs des Schellengehäuses 5 ist eine Antriebseinrichtung 6 vorgesehen, mittels der der Sägekranzfräser 4 in seiner Axialrichtung sowie der des Schellengehäuses 5 und damit in Radialrichtung des Fluidrohrs 2 verstellbar und mittels der der Sägekranzfräser 4 rotierbar ist.

Die Antriebseinrichtung 6 hat einen ersten Gewindeantrieb 8, der bei dem in Figur 1 gezeigten Ausführungsbeispiel der Anbohrarmatur 1 am dem Sägekranzfräser 4 zugewandten Endabschnitt einer Gewindehülse 9 ausgebildet ist, und einen zweiten Gewindeantrieb 10, der am dem Sägekranzfräser 4 abgewandten Endabschnitt der vorstehend erwähnten Gewindehülse 9 ausgebildet ist.

Der erste Gewindeantrieb 8 besteht aus einem ersten Innengewindeglied 11 und einem ersten Außengewindeglied 12. Das erste Innengewindeglied 4 ist mittels einer Verschraubung 13 axial- und drehfest mit dem Sägekranzfräser 4 verbunden. Die Außenfläche des ersten Innengewindeglieds 11 ist mit einem Gewinde versehen, das mit einem Gewinde in Eingriff ist, das auf der Innenseite der Gewindehülse 9 an deren dem Sägekranzfräser 4 zugewandten Endabschnitt ausgebildet ist. Am dem Sägekranzfräser 4 abgewandten Ende des ersten Innengewindeglieds 11 ist dieses mit einem Innenmehrkant 14 ausgebildet. Durch Drehung des ersten Innengewindeglieds 11 wird der Sägekranzfräser 4 rotiert und gleichzeitig mit der Rotation in Axialrichtung des Schellengehäuses 5 - je nach Drehrichtung - verstellt, da sich das erste Innengewindeglied 11 in Bezug auf das erste Außengewindeglied 12 sowohl dreht als auch in Axialrichtung 7 bewegt.

Das erste Außengewindeglied 12 ist, solange nur das erste Innengewindeglied 11 rotiert wird, in Bezug auf das Schellengehäuse 5 sowohl dreh- als auch axialfest angeordnet.

Am dem ersten Außengewindeglied 12 entgegengesetzten Endabschnitt der Gewindehülse 9 ist das zweite Außengewindeglied 15 des zweiten Gewindeantriebs 10 angeordnet. Mit diesem in Eingriff ist das zweite Innengewindeglied 16 des zweiten Gewindeantriebs. Bei einer Rotation des zweiten Innengewindeglieds 16 wird das zweite Außengewindeglied 15 und mit ihm die Gewindehülse 9 in Axialrichtung 7 innerhalb des Schellengehäuses 5 verstellt.

Die Gewindesteigung des zweiten Gewindeantriebs 10 ist zu der des ersten Gewindeantriebs 8 gegenläufig, d.h., eine Drehung des zweiten Innengewindeglieds 16 hat eine Verstellung der Gewindehülse 9 in Axialrichtung zur Folge, die der Verstellung des ersten Innengewindeglieds 11 bei dessen Drehung in Axialrichtung entgegengesetzt ist. Während sich das erste Innengewindeglied 11 mit dem Sägekranzfräser 4 beispielsweise in Richtung auf das Innere des Fluidrohrs 2 bewegt, bewegt sich die Gewindehülse 9 vom Fluidrohr 2 weg, wenn das erste Innengewindeglied 11 und das zweite Innengewindeglied 16 gleichzeitig rotiert werden. Das zweite Innengewindeglied 16 hat hierfür einen Innenmehrkant 17 an seinem dem Fluidrohr 2 abgewandten Ende.

Die Gewindeneigungen des ersten Gewindeantriebs 8 und des zweiten Gewindeantriebs 10 sind so gewählt, dass sich bei einer Drehung der beiden Innengewindeglieder 11, 16 das erste Innengewindeglied 11 mit einer etwas größeren Geschwindigkeit in Richtung auf das Innere des Fluidrohrs 2 bewegt als sich die Gewindehülse 9 in Gegenrichtung bewegt, so dass der Sägekranzfräser 4 mit einer vergleichsweise geringen Vorschubgeschwindigkeit die Wandung 3 des Fluidrohrs 2 durchdringt. Die Vorschubgeschwindigkeit des Sägekranzfräsers 4 entspricht der Differenz aus der Geschwindigkeit des sich in Richtung auf das Innere des Fluidrohrs 2 bewegenden ersten Gewindeglieds 11 einerseits und der Geschwindigkeit der sich vom Fluidrohr 2 in Axialrichtung 7 weg bewegenden Gewindehülse 9.

Um den Sägekranzfräser 4 in die in Figur 1 gezeigte Position nahe bzw. an der Außenseite der Wandung 3 des Fluidrohrs 2 zu bringen, wird das erste Gewindeglied 11 mittels eines in Figur 2 links gezeigten Mehrkants 18 in die entsprechende Drehrichtung rotiert. Hierzu wird der Mehrkant 18 durch das hohlzylindrisch ausgebildete zweite Innengewindeglied 16 mit dem Innenmehrkant 14 am fluidrohrfernen Ende des ersten Innengewindeglieds 11 in drehfesten Eingriff gebracht. Bei der dann vorgenommenen Drehung des Mehrkants 18 wird das erste Innengewindeglied 11 in diejenige Drehrichtung rotiert, die zu einer Annäherung des ersten Gewindeglieds 11 und damit des Sägekranzfräsers 4 an die Außenseite der Wandung 3 des Fluidrohrs 2 führt. Sobald der Sägekranzfräser 4 die Außenseite der Wandung 3 des Fluidrohrs 2 erreicht hat, wird der Mehrkant 18 außer Eingriff mit dem Innenmehrkant 14 des ersten Innengewindeglieds 11 gebracht. Eine weitere Drehung des ersten Gewindeglieds 11 allein durch den Mehrkant 18 ist nicht mehr sinnvoll, da die Vorschubgeschwindigkeit des Sägekranzfräsers 4 zu groß ist, um mittels des rotierenden Sägekranzfräsers 4 die Wandung 3 des Fluidrohrs 2 zu durchdringen.

Nachdem der Mehrkant 18 durch das zweite Innengewindeglied 16 aus der Anbohrarmatur 1 entfernt ist, wird ein in Figur 2 rechts gezeigter Zweistufenmehrkant 19 durch das hohlzylindrisch ausgebildete zweite Innengewindeglied 16 in die Anbohrarmatur 1 eingeführt. Der Zweistufenmehrkant 19 hat eine hinsichtlich ihres Umfangs an den Innenmehrkant 14 des ersten Gewindeglieds 11 angepasste Mehrkantstufe 20 an seinem in Figur 2 unteren Ende und eine seinen übrigen Bereich einnehmende Mehrkantstufe 21, die hinsichtlich ihres Umfangs an den Innenmehrkant 17 des zweiten Innengewindeglieds 16 angepasst ist.

Wenn die dem ersten Innengewindeglied 11 zugeordnete Mehrkantstufe 20 in Eingriff mit dem Innenmehrkant 14 des ersten Innengewindeglieds 11 ist, ist in jedem Fall die Mehrkantstufe 21 in ebenfalls drehfestem Eingriff mit dem Innenmehrkant 17 des zweiten Innengewindeglieds 16.

Nunmehr wird der Zweistufenmehrkant 19 rotiert. Aufgrund der Rotation des ersten Innengewindeglieds 11 wird dieses in Bezug auf das erste Außengewindeglied 12 bzw. die Gewindehülse 9 zum Inneren des Fluidrohrs 2 hin verstellt. Des weiteren rotiert selbstverständlich der Sägekranzfräser 4. Aufgrund der Gegenläufigkeit zum ersten Gewindeantrieb 8 wird das zweite Außengewindeglied 15 und mit diesem die Gewindehülse 9 bzw. das erste Außengewindeglied 12 in Axialrichtung 7 vom Fluidrohr 2 weg verstellt. Die Gewindesteigungen des ersten Gewindeantriebs 8 und des zweiten Gewindeantriebs 10 sind so aufeinander abgestimmt, dass bei entsprechender Drehrichtung des Zweistufenmehrkants 19 die Vorschubgeschwindigkeit des Sägekranzfräsers 4 in Richtung auf das Innere des Fluidrohrs 2 vergleichsweise gering ist. Bei der derart gering bemessenen Vorschubgeschwindigkeit des Sägekranzfräsers 4 kann dieser die Wandung 3 durchdringen, die vom Sägekranzfräser 4 bei seiner Durchdringung der Wandung 3 des Fluidrohrs 2 aus der Wandung 3 herausgeschnittene Platine wird durch geeignete Maßnahmen innerhalb des Innenraums des Sägekranzfräsers 4 bzw. des Schellengehäuses 5 gehalten. Hierzu kann z.B. ein Magnet od.dgl. dienen, der in geeigneter Weise im Innenraum des Sägekranzfräsers 4 angeordnet werden kann und die vom Sägekranzfräser 4 aus der Wandung 3 herausgetrennte Platine fixieren kann. Alternativ ist es möglich, den vorderen Bereich der Innenmantelfläche des Sägekranzfräsers 4 mit einem Innengewinde oder mit entsprechend ausgebildeten Punktierungen zu versehen, so dass diese auf die Mantelfläche der vorstehend erwähnten Platine ein Gewinde einschneiden und die Platine so innerhalb des Sägekranzfräsers 4 haltern.

Um sicherzustellen, dass beispielsweise eine Sphäro-Gussleitung ohne weiteres mittels der vorstehend geschilderten Anbohrarmatur 1 durchdringbar ist, kann der erste Gewindeantrieb beispielsweise eine Gewindesteigung von 1,75 mm je Umdrehung und der zweite Gewindeantrieb eine in Bezug auf die des ersten Gewindeantriebs 8 gegenläufige Gewindesteigung von 1,50 mm je Umdrehung aufweisen. Aus der Differenz der beiden Gewindesteigungen ergibt sich dann eine Vorschubgeschwindigkeit des Sägekranzfräsers 4 je Umdrehung des Zweistufenmehrkants 19 von 0,25 mm. Die Gewindesteigungen von 1,75 mm bzw. 1,50 mm sind vergleichsweise einfach herstellbar. Je nach Anforderungsprofil an die Anbohrarmatur können aber auch andere Gewindesteigungen für den ersten Gewindeantrieb 8 und den zweiten Gewindeantrieb 10 gewählt werden. Wesentlich für die Auswahl der Gewindesteigungen ist, dass sich eine Vorschubgeschwindigkeit des Sägekranzfräsers 4 ergibt, die ausreichend gering ist, um sicherzustellen, dass mittels des Sägekranzfräsers 4 die Wandung 3 des Fluidrohrs 2 durchdringbar ist. Hier können je nach Material der Wandung 3 des Fluidrohrs 2 unterschiedliche Vorschubgeschwindigkeiten angestrebt werden. Darüber hinaus können die Vorschubgeschwindigkeiten entsprechend eingestellt werden, wenn statt des Sägekranzfräsers 4 ein anderes Fräselement, ein Bohrelement oder ein Stanzelement eingesetzt wird. Mittels der aus zwei gegenläufigen Gewindeantrieben 8, 10 ausgebildeten Antriebseinrichtung 6 der Anbohrarmatur 1 ist quasi eine beliebige Vorschubgeschwindigkeit des die Durchdringung der Wandung 3 des Fluidrohrs bewerkstelligenden Fräs-, Bohr- oder Stanzelements erreichbar.

Der in dem Ausführungsbeispiel gemäß Figur 1 vorgesehene Sägekranzfräser 4 ist z.B. aus einem HSS-Bi-Metall ausgebildet.

## Patentansprüche

1. Anbohrarmatur (1) für Fluidrohre (2), insbesondere aus metallischen, wie Stahl- und Gusswerkstoffen, mit einem Bohr-, Fräs- oder Stanzelement (4), mittels dem eine Wandung (3) des Fluidrohrs (2) durchbohr-, durchfräs- bzw. durchstanzbar ist, einem Schellengehäuse (5), das am Fluidrohr (2) positionier - und fixierbar ist und in dem das Bohr-, Fräs- oder Stanzelement (4) in Axialrichtung verstellbar aufgenommen ist, und einer Antriebseinrichtung (6), mittels der das Bohr-, Fräs - oder Stanzelement (4) im Schellengehäuse (5) in dessen und seiner Axial- (7) bzw. in Radialrichtung des Fluidrohrs (2) verstellbar ist, wobei die Antriebseinrichtung (6) einen ersten Gewindeantrieb (8) mit einem ersten Innen- (11) und einem ersten Außengewindeglied (12) und einen zweiten Gewindeantrieb (10) mit einem zweiten Innen- (16) und einem zweiten Außengewindeglied (15) aufweist, **dadurch gekennzeichnet, dass** die beiden Gewindeantriebe (8, 10) gleichzeitig betätigbar sind, und dass die beiden Gewindeantriebe (8, 10) in Bezug auf die axiale Vertellung des Bohr-, Fräs- oder Stanzelements (4) gegenläufig ausgebildet sind, so dass der Vorschub bzw. der Rückhub des Bohr-, Fräs- oder Stanzelements (4) bei gleichzeitiger Betätigung der beiden Gewindeantriebe (8, 10) der Differenz zwischen der Gewindesteigung des ersten Gewindeantriebs (8) und der Gewindesteigung des zweiten Gewindeantriebs (10) entspricht.

2. Anbohrarmatur nach Anspruch 1, bei der die Differenz der Gewindesteigung zwischen den beiden Gewindeantrieben (8, 10) zumindest 0,1 mm je Umdrehung, vorzugsweise ca. 0,25 mm je Umdrehung, beträgt, so dass das Bohr-, Fräs- oder Stanzelement (4) bei gleichzeitiger Betätigung der beiden Gewindeantriebe (8, 10) je Umdrehung zumindest um 0,1 mm, vorzugsweise ca. 0,25 mm, in seiner Axialrichtung (7) verstellbar ist.

3. Anbohrarmatur nach Anspruch 2, bei der der erste Gewindeantrieb (8) eine Gewindesteigung von ca. 1,75 mm je Umdrehung und der zweite Gewindeantrieb (10) eine in Bezug auf die des ersten gegenläufige Gewindesteigung von ca. 1,50 mm je Umdrehung aufweist.

4. Anbohrarmatur nach einem der Ansprüche 1 bis 3, bei der das erste Innengewindeglied (11) des ersten Gewindeantriebs (8) axial- und drehfest mit dem Bohr-, Fräs- bzw. Stanzelement (4) verbunden ist.

5. Anbohrarmatur nach einem der Ansprüche 1 bis 4, bei der das erste Außengewindeglied (12) des ersten Gewindeantriebs (8) am fluidrohrseitigen Endabschnitt einer Gewindehülse (9) und das zweite Außengewindeglied (15) des zweiten Gewindeantriebs (10) am fluidrohrfernen Endabschnitt der Gewindehülse (9) angeordnet sind.

6. Anbohrarmatur nach einem der Ansprüche 1 bis 5, bei der das erste Innengewindeglied (11) des ersten Gewindeantriebs (8) separat betätigbar ist.

7. Anbohrarmatur nach Anspruch 6, bei der das erste Innengewindeglied (11) des ersten Gewindeantriebs (8) mittels eines das zweite Innengewindeglied (16) des zweiten Gewindeantriebs (10) axial durchgreifenden Betätigungswerkzeugs, vorzugsweise eines Mehrkants (18), betätigbar ist.

8. Anbohrarmatur nach einem der Ansprüche 1 bis 7, bei der die beiden Gewindeantriebe (8, 10) gleichzeitig durch einen Zweistufenmehrkant (19) betätigbar sind, wobei die Mehrkantstufe (20) zur Betätigung des ersten Gewindeantriebs (8) einen kleineren Durchmesser als die Mehrkantstufe (21) zur Betätigung des zweiten Gewindeantriebs (10) aufweist.

9. Anbohrarmatur nach einem der Ansprüche 1 bis 8, die als Wasser- oder Gas-Hausanschlussarmatur einsetzbar ist.

10. Anbohrarmatur nach einem der Ansprüche 1 bis 9, die zur Durchbohrung, -fräsung bzw. -stanzung von Fluidrohren (2) aus Sphäro-Guss, ggf. mit ZM-Auskleidung und/oder ZM-Ummantelung, oder aus Stahl od.dgl. ausgebildet ist.

11. Anbohrarmatur nach einem der Ansprüche 1 bis 10, deren Fräselement als Sägekranzfräser (4) ausgebildet ist.

12. Anbohrarmatur nach Anspruch 11, deren Sägekranzfräser (4) aus HSS-Bi-Metall ausgebildet ist.

13. Anbohrarmatur nach einem der Ansprüche 1 bis 12, mit einem Magneten, mittels dem ein aus dem Fluidrohr (2) ausgebohrtes, -gefrästes bzw. -gestanztes Wandungsstück festhaltbar ist.

14. Anbohrarmatur nach einem der Ansprüche 1 bis 13, deren Bohr-, Fräs- bzw. Stanzelement (4) auf seiner Innenmantelfläche ein flaches Innengewinde bzw. eine Punktierung aufweist, mittels der auf der Außenumfangsfläche des Wandungsstücks ein Gewinde einschneidbar und so das Wandungsstück fixierbar ist.

15. Anbohrarmatur nach einem der Ansprüche 1 bis 13, deren Bohr-, Fräs- bzw. Stanzelement (4) auf seiner Innenmantelfläche ein radial einwärts vorstehendes dünnwandiges Vorsprungelement, z.B. einen dünnwandigen Teilkreis, aufweist, das bzw. der vorzugsweise aus Blech, Edelstahl oder einem ähnlichen Werkstoff ausgebildet ist.

## Claims

1. A tapping brace (1) for fluid pipes (2), in particular made of metallic materials such as steel materials and cast materials, comprising: a drilling, milling or punching element (4) by means of which it is possible to drill, mill and/or punch through a wall (3) of the fluid pipe (2); a bracket housing (5) which can be positioned and fixed on the fluid pipe (2) and in which the drilling, milling or punching element (4) is accommodated such that it can be adjusted in the axial direction; and a drive means (6) by means of which the drilling, milling or punching element (4) can be adjusted in the bracket housing (5) in the axial direction (7) of the drilling, milling or punching element (4) and the bracket housing (5) and/or in the radial direction of the fluid pipe (2), wherein the drive means (6) comprises a first threaded drive (8) featuring a first inner-threaded member (11) and a first outer-threaded member (12) and comprises a second threaded drive (10) featuring a second inner-threaded member (16) and a second outer-threaded member (15), **characterised in that** the two threaded drives (8, 10) can be simultaneously operated and **in that** the two threaded drives (8, 10) are formed in opposite directions with respect to axially adjusting the drilling, milling or punching element (4), such that when the two threaded drives (8, 10) are simultaneously operated, the advance and/or return stroke of the drilling, milling or punching element (4) corresponds to the difference between the thread pitch of the first threaded drive (8) and the thread pitch of the second threaded drive (10).

2. The tapping brace according to Claim 1, wherein the difference in thread pitch between the two threaded drives (8, 10) is at least 0.1 mm per revolution, preferably about 0.25 mm per revolution, such that when the two threaded drives (8, 10) are simultaneously operated, the drilling, milling or punching element (4) can be adjusted in its axial direction (7) by at least 0.1 mm, preferably about 0.25 mm, per revolution.

3. The tapping brace according to Claim 2, wherein the first threaded drive (8) exhibits a thread pitch of about 1.75 mm per revolution, and the second threaded drive (10) exhibits a thread pitch in the opposite direction to that of the first threaded drive (8) of about 1.50 mm per revolution.

4. The tapping brace according to any one of Claims 1 to 3, wherein the first inner-threaded member (11) of the first threaded drive (8) is connected, axially and rotationally fixed, to the drilling, milling and/or punching element (4).

5. The tapping brace according to any one of Claims 1 to 4, wherein the first outer-threaded member (12) of the first threaded drive (8) is arranged on the end portion of a threaded sleeve (9) at the fluid-pipe end, and the second outer-threaded member (15) of the second threaded drive (10) is arranged on the end portion of the threaded sleeve (9) away from the fluid pipe.

6. The tapping brace according to any one of Claims 1 to 5, wherein the first inner-threaded member (11) of the first threaded drive (8) can be operated separately.

7. The tapping brace according to Claim 6, wherein the first inner-threaded member (11) of the first threaded drive (8) can be operated by means of an operating tool, preferably a polygonal shaft (18), which engages axially through the second inner-threaded member (16) of the second threaded drive (10).

8. The tapping brace according to any one of Claims 1 to 7, wherein the two threaded drives (8, 10) can be simultaneously operated by a two-stage polygonal shaft (19), wherein the polygonal shaft stage (20) for operating the first threaded drive (8) exhibits a smaller diameter than the polygonal shaft stage (21) for operating the second threaded drive (10).

9. The tapping brace according to any one of Claims 1 to 8, which can be used as a water or gas service connection brace.

10. The tapping brace according to any one of Claims 1 to 9, which is formed for drilling, milling and/or punching through fluid pipes (2) made of spheroidal graphite, as applicable with a cement mortar lining and/or cement mortar casing, or made of steel or the like.

11. The tapping brace according to any one of Claims 1 to 10, in which the milling element is formed as a milling saw blade (4).

12. The tapping brace according to Claim 11, in which the milling saw blade (4) is formed from HSS bimetal.

13. The tapping brace according to any one of Claims 1 to 12, comprising a magnet by means of which a piece of wall drilled, milled and/or punched out of the fluid pipe (2) can be fixedly held.

14. The tapping brace according to any one of Claims 1 to 13, in which the inner surface area of the drilling, milling and/or punching element (4) comprises a flat inner thread and/or dotting by means of which a thread can be cut into the outer surface area of the piece of wall such that the piece of wall can be fixed.

15. The tapping brace according to any one of Claims 1 to 13, in which the inner surface area of the drilling, milling and/or punching element (4) comprises a thin-walled projection element, for example a thin-walled pitch circle, which projects radially inwards and is preferably formed from sheet metal, stainless steel or a similar material.

## Revendications

1. Accessoire de perçage (1) pour des tuyaux de fluide (2), en particulier constitués de matériaux métalliques, tels que des matériaux d'aciérie et de fonderie, comportant un élément de perçage, de fraisage ou de poinçonnage (4), au moyen duquel un perçage, un fraisage ou un poinçonnage peut être réalisé à travers une paroi (3) du tuyau de fluide (2), un corps de bride (5) qui peut être positionné et fixé sur le tuyau de fluide (2) et dans lequel l'élément de perçage, de fraisage ou de poinçonnage (4) est reçu de manière réglable dans une direction axiale, et un dispositif d'entraînement (6) au moyen duquel l'élément de perçage, de fraisage ou de poinçonnage (4) peut être réglé dans le corps de bride (5) dans la direction axiale (7) ou dans une direction radiale du tuyau de fluide (2), le dispositif d'entraînement (6) comportant un premier entraînement fileté (8) muni d'un premier élément fileté intérieur (11) et d'un premier élément fileté extérieur (12) et un second entraînement fileté (10) muni d'un second élément fileté intérieur (16) et d'un second élément fileté extérieur (15), **caractérisé en ce que** les deux entraînements filetés (8, 10) peuvent être manoeuvrés simultanément, et **en ce que** les deux entraînements filetés (8, 10) sont configurés de manière opposée par rapport au réglage axial de l'élément de perçage, de fraisage ou de poinçonnage (4), de telle sorte que l'avance ou le recul de l'élément de perçage, de fraisage ou de poinçonnage (4) lors de la manoeuvre simultanée des deux entraînements filetés (8, 10) correspond à la différence entre le pas de filetage du premier entraînement fileté (8) et le pas de filetage du second entraînement fileté (10).

2. Accessoire de perçage selon la revendication 1, dans lequel la différence du pas de filetage entre les deux entraînements filetés (8, 10) est au moins de 0,1 mm par tour, de préférence d'environ 0,25 mm par tour, de telle sorte que l'élément de perçage, de fraisage ou de poinçonnage (4) peut être réglé d'au moins 0,1 mm, de préférence d'environ 0,25 mm, à chaque tour lors de la manoeuvre simultanée des deux entraînements filetés (8, 10) dans sa direction axiale (7).

3. Accessoire de perçage selon la revendication 2, dans lequel le premier entraînement fileté (8) présente un pas de filetage d'environ 1,75 mm par tour et le second entraînement fileté (10) présente un pas de filetage opposé au premier d'environ 1,50 mm par tour.

4. Accessoire de perçage selon l'une quelconque des revendications 1 à 3, dans lequel le premier élément fileté intérieur (11) du premier entraînement fileté (8) est relié à l'élément de perçage, de fraisage ou de poinçonnage (4) de manière axialement fixe et bloquée en rotation.

5. Accessoire de perçage selon l'une quelconque des revendications 1 à 4, dans laquelle le premier élément fileté extérieur (12) du premier entraînement fileté (8) est agencé sur la partie d'extrémité côté tuyau de fluide d'une douille filetée (9) et le second élément fileté extérieur (15) du second entraînement fileté (10) est agencé sur la partie d'extrémité éloignée du tuyau de fluide de la douille filetée (9).

6. Accessoire de perçage selon l'une quelconque des revendications 1 à 5, dans lequel le premier élément fileté intérieur (11) du premier entraînement fileté (8) peut être manoeuvré séparément.

7. Accessoire de perçage selon la revendication 6, dans lequel le premier élément fileté intérieur (11) du premier entraînement fileté (8) peut être manoeuvré au moyen d'un outil de manoeuvre traversant axialement le second élément fileté intérieur (16) du second entraînement fileté (10), de préférence un outil polygonal (18).

8. Accessoire de perçage selon l'une quelconque des revendications 1 à 7, dans lequel les deux entraînements filetés (8, 10) peuvent être manoeuvrés simultanément par un outil polygonal à deux étages (19), dans laquelle l'étage d'outil polygonal (20) destiné à manoeuvrer le premier entraînement fileté (8) présente un diamètre inférieur à l'étage d'outil polygonal (21) destiné à manoeuvrer le second entraînement fileté (10).

9. Accessoire de perçage selon l'une quelconque des revendications 1 à 8, pouvant servir d'accessoire de raccordement domestique d'eau ou de gaz.

10. Accessoire de perçage selon l'une quelconque des revendications 1 à 9, conçu pour percer, fraiser ou poinçonner à travers des tuyaux de fluide (2) en fonte nodulaire, comportant éventuellement un revêtement ZM et/ou une enveloppe ZM, ou en acier ou analogue.

11. Accessoire de perçage selon l'une quelconque des revendications 1 à 10, dont l'élément de fraisage est configuré sous la forme d'une fraise à couronne (4).

12. Accessoire de perçage selon la revendication 11, dont la fraise à couronne (4) est formée à partir d'un métal HSS-Bi.

13. Accessoire de perçage selon l'une quelconque des revendications 1 à 12, comportant un aimant au moyen duquel une pièce de paroi percée, fraisée ou poinçonnée sur le tuyau de fluide (2) peut être maintenue.

14. Accessoire de perçage selon l'une quelconque des revendications 1 à 13, dont l'élément de perçage, de fraisage ou de poinçonnage (4) comporte, sur sa surface d'enveloppe intérieure, un filetage intérieur droit ou un pointillé, au moyen duquel un filetage peut être taillé sur la surface circonférentielle extérieure de la pièce de paroi et peut ainsi fixer la pièce de paroi.

15. Accessoire de perçage selon l'une quelconque des revendications 1 à 13, dont l'élément de perçage, de fraisage ou de poinçonnage (4) comporte, sur sa surface d'enveloppe intérieure, un élément saillant à paroi mince, faisant radialement saillie vers l'intérieur, par exemple un cercle primitif à paroi mince, formé de préférence en tôle, en acier inoxydable ou en un matériau analogue.
